# FASCICULE DE BREVET EUROPEEN

(11) **EP 4 071 387 B1**
(45) Date de publication et mention de la délivrance du brevet: **06.03.2024**
(21) Numéro de dépôt: 22166504.5
(22) Date de dépôt: 04.04.2022
(51) Int. Cl.: F16K 1/22, F16K 31/60

(54) **ROBINET QUART DE TOUR A PAPILLON**
VIERTELDREHKLAPPE
QUARTER-TURN BUTTERFLY VALVE

(30) Priorité: 09.04.2021 FR 2103642
(43) Date de publication de la demande: 12.10.2022
(73) Titulaire: KSB S.A.S, 92230 Gennevilliers (FR)
(72) Inventeur: GALINDO, Jean-François, 33520 Bruges (FR); SMARA, Adel, 33400 Talence (FR)
(74) Mandataire: Eidelsberg, Olivier Nathan

(56) Documents cités:
- CN-U- 204 784 830
- JP-A- 2005 351 353
- US-A- 1 086 982
- US-A- 3 383 944
- US-A1- 2004 031 944
- US-B2- 9 989 154

## Description

Dans l'industrie il est courant d'utiliser des robinets quart de tour à papillon. Ce type de robinet est monté sur un conduit à bride et comporte un corps annulaire dans lequel est reçu un papillon permettant de fermer et d'ouvrir le conduit. Un arbre de section transversale carrée est monté solidaire en rotation du papillon. Cette géométrie carrée permet une bonne transmission de couple et donc d'avoir un arbre peu encombrant. Un levier s'emmanche à complémentarité de forme sur l'arbre pour permettre à l'utilisateur de déplacer le papillon.

L'inconvénient de ce type d'arbre est que la géométrie carrée permet de monter le levier dans quatre positions différentes, dont deux qui n'indiquent pas correctement la position du papillon. Une erreur dans le montage du levier est fréquente et peut avoir de graves conséquences. Le document US2004/031944 décrit un robinet dont la géométrie de l'arbre et de la partie d'emmanchement du levier permet le montage du levier dans une position unique.

La présente invention vise à surmonter les inconvénients de l'art antérieur en proposant un robinet quart de tour comportant :
- un corps définissant un siège annulaire autour d'un axe de révolution,
- un papillon solidaire en rotation, sur un quart de tour, d'un premier bout d'un arbre de section transversale carrée, qui s'applique au siège en une première position et qui s'écarte du siège en une deuxième position à 90° de la première position, la face frontale à découvert du second bout de l'arbre portant une marque directionnelle parallèle au plan du papillon,
- un levier ayant une partie d'emmanchement, qui peut-être moulée ou usinée, emmanchée à complémentarité de forme sur le second bout de l'arbre et s'étendant perpendiculairement à l'arbre, et une poignée oblongue, ayant une direction principale longitudinale,
caractérisé en ce que
l'arbre a exactement deux rainures longitudinales conjuguées d'exactement deux nervures de la partie d'emmanchement, les deux rainures étant disposées symétriquement l'une de l'autre par rapport à l'axe de répétition de l'arbre, et la direction principale de la poignée est parallèle à la marque directionnelle.

On conserve ainsi pour l'essentiel la géométrie carrée de l'arbre favorable à la transmission du couple mais, on supprime toute possibilité d'un montage erroné indiquant par la marque directionnelle que le robinet est fermé alors qu'il est ouvert et inversement, tout en conservant deux possibilités de montage à 180° l'une de l'autre permettant de monter le robinet même dans des environnements encombrés. Suivant l'invention, on a supprimé l'axe de répétition d'ordre quatre en lui substituant en axe d'ordre deux. L'axe de répétition est la ligne fictive perpendiculaire à la section transversale passant par le point d'intersection des diagonales du carré.

La géométrie de l'arbre permet ainsi l'emmanchement du levier encore dans deux positions à 180° l'une de l'autre indiquant correctement la position du papillon et l'arbre est peu encombrant mais possède un bon couple.

La marque directionnelle peut être un trait de scie parallèle au plan du papillon. La marque directionnelle est ainsi dans un plan parallèle au plan longitudinal du levier, qui est donc parallèle au conduit sur lequel le robinet est monté quand le papillon est dans la position ouverte et perpendiculaire au conduit dans la position fermée, ceci étant plus intuitif pour un utilisateur.

Les rainures s'étendent de préférence sur deux faces latérales de l'arbre parallèles à la marque directionnelle, en assurant ainsi une meilleure transmission du couple entre l'arbre et le levier.

Suivant un mode de réalisation préféré, chaque rainure est à la même distance des deux arêtes longitudinales de la face sur laquelle elle s'étend.

L'arbre carré peut ainsi être monté dans une position diagonale par rapport à l'obturateur tout en bénéficiant des mêmes avantages que le mode de réalisation précédent.

A titre d'exemple, on décrit maintenant un mode de réalisation préféré de l'invention en se reportant aux dessins, dans lesquels :

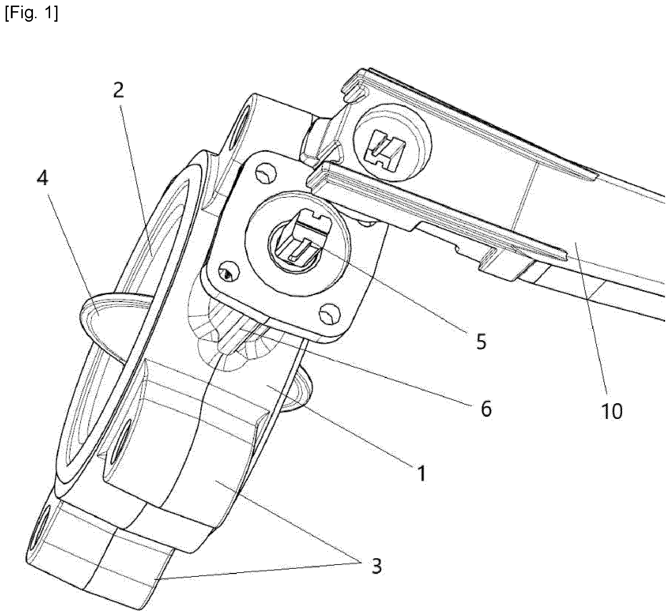

La figure 1 est une vue en perspective du robinet quart de tour, alors que le levier n'est pas emmanché sur l'arbre,

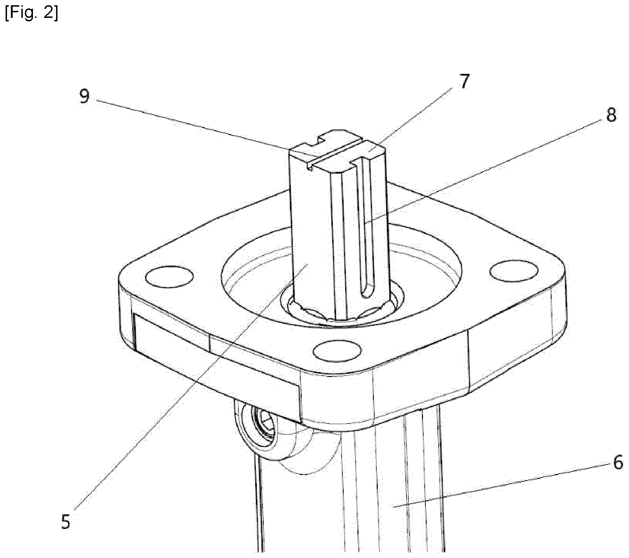

la figure 2 est une vue en perspective de l'arbre faisant saillie du corps sans le levier, et

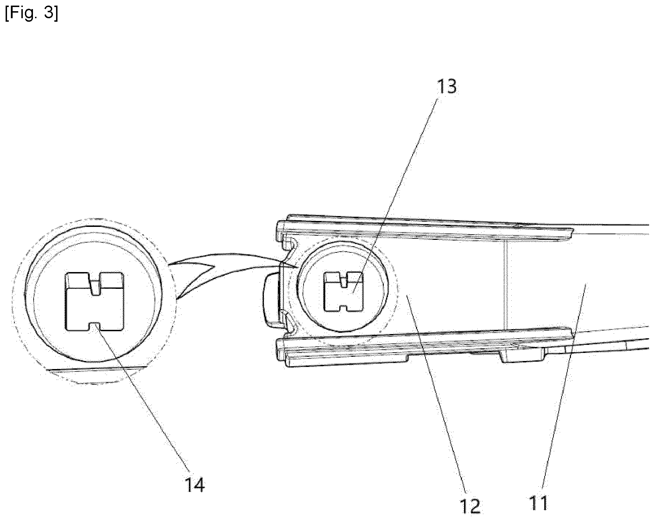

la figure 3 est une vue en perspective du levier.

Ce robinet quart de tour comporte un corps 1 annulaire définissant un siège 2 et comportant des anneaux 3 de fixation pour brider le robinet à un conduit. Un papillon 4 lenticulaire, reçu à étanchéité lorsqu'il s'y applique dans le siège 2, est monté solidaire en rotation sur un quart de tour d'un arbre 5, traversant le corps 1 par un col 6, pour s'appliquer au siège 2 ou s'en écarter.

L'arbre 5, de section transversale carrée, fait saillie du col 6 et comporte une face 7 libre, quatre faces longitudinales opposées deux à deux et deux rainures 8 longitudinales sur les deux faces longitudinales opposées parallèles au plan du papillon 4, chaque rainure 8 étant à la même distance des deux arêtes longitudinales de la face sur laquelle elle s'étend. Un trait 9 de scie s'étend sur la face 7 libre de l'arbre parallèlement au plan du papillon 4.

Un levier 10 comporte une poignée 11 oblongue de direction principale longitudinale et une partie 12 d'emmanchement définissant une ouverture 13 de forme carrée de dimensions de section transversale juste supérieures aux dimensions de section transversale de l'arbre 5 et ayant quatre parois latérales opposées deux à deux de hauteurs égales à la hauteur de la partie de l'arbre 5 faisant saillie du col 6. L'ouverture 13 comporte des nervures 14 sur les deux parois opposées parallèles à la direction principale de la poignée, chaque nervure 14 étant à la même distance des deux arêtes longitudinales de la paroi sur laquelle elle s'étend. Chaque nervure 14 vient, de manière conjuguée, dans une rainure 8 lorsque le levier 10 est emmanché.

Le levier 10 peut ainsi être emmanchée suivant deux positions symétriques l'une de l'autre par rapport à un plan perpendiculaire au trait 9 de scie, mais non dans les deux autres positions à 90°.

## Revendications

1. Robinet quart de tour comportant :
- un corps (1) définissant un siège (2) annulaire autour d'un axe de révolution,
- un papillon (4) solidaire en rotation, sur un quart de tour, d'un premier bout d'un arbre (5) de section transversale carrée, qui s'applique au siège (2) en une première position et qui s'écarte du siège (2) en une deuxième position à 90° de la première position, la face (7) frontale à découvert du second bout de l'arbre (5) portant une marque (9) directionnelle parallèle au plan du papillon (4),
- un levier (10) ayant une partie (12) d'emmanchement, emmanchée à complémentarité de forme sur le second bout de l'arbre (5) et s'étendant perpendiculairement à l'arbre, et une poignée (11) oblongue, ayant une direction principale longitudinale,
**caractérisé en ce que**
l'arbre (5) a exactement deux rainures (8) longitudinales conjuguées d'exactement deux nervures (14) de la partie (12) d'emmanchement, les deux rainures (8) étant disposées symétriquement l'une de l'autre par rapport à l'axe de répétition de l'arbre (5), et la direction principale de la poignée (11) est parallèle à la marque (9) directionnelle.

2. Robinet quart de tour suivant la revendication 1, **caractérisé en ce que** la marque (9) directionnelle est un trait de scie.

3. Robinet quart de tour suivant la revendication 1 ou 2, **caractérisé en ce que** les rainures (8) s'étendent sur deux faces latérales de l'arbre (5) parallèles à la marque (9) directionnelle.

4. Robinet quart de tour suivant l'une quelconque des revendications précédentes, **caractérisé en ce que** chaque rainure (8) est à la même distance des deux arêtes longitudinales de la face sur laquelle elle s'étend.

## Patentansprüche

1. Vierteldrehungsventil, aufweisend:
- einen Körper (1), der einen ringförmigen Sitz (2) um eine Rotationsachse definiert,
- eine Ventilklappe (4), die vierteldrehfest mit einem ersten Stumpf einer Welle (5) mit quadratischem Querschnitt verbunden ist und in einer ersten Position den Sitz (2) beaufschlagt und sich in einer zweiten Position 90° von der ersten Position von dem Sitz (2) entfernt, wobei die freiliegende Stirnfläche (7) des zweiten Stumpfs der Welle (5) eine parallel zur Ebene der Ventilklappe (4) liegende Richtungsmarkiering (9) trägt,
- einen Hebel (10) mit einem Pressverbindungsteil (12), das formschlüssig auf den zweiten Stumpf der Welle (5) gepresst ist und sich senkrecht zu der Welle erstreckt, und einem länglichen Griff (11), der eine längliche Hauptrichtung hat,
**dadurch gekennzeichnet, dass**
die Welle (5) genau zwei Längsnuten (8) hat, die genau zwei Rippen (14) des Pressverbindungsteils (12) zugeordnet sind, wobei die beiden Nuten (8) bezüglich der Repetitionsachse der Welle (5) zueinander symmetrisch angeordnet sind, und die Hauptrichtung des Griffs (11) parallel zu der Richtungsmarkierung (9) verläuft.

2. Vierteldrehungsventil nach Anspruch 1, **dadurch gekennzeichnet, dass** die Richtungsmarkierung (9) eine Kerbe ist.

3. Vierteldrehungsventil nach Anspruch 1 oder 2, **dadurch gekennzeichnet, dass** sich die Nuten (8) auf zwei Seitenflächen der Welle (5) parallel zu der Richtungsmarkierung (9) erstrecken.

4. Vierteldrehungsventil nach einem der vorhergehenden Ansprüche, **dadurch gekennzeichnet, dass** jede Nut (8) denselben Abstand von den beiden Längskanten der Fläche hat, auf der sie sich erstreckt.

## Claims

1. Quarter-turn valve comprising:
- a body (1) defining an annular seat (2) around an axis of revolution,
- a butterfly disc (4) rotationally fixed, over a quarter turn, to a first end of a shaft (5) with a square cross-section, which is applied to the seat (2) in a first position and which moves away from the seat (2) in a second position 90° from the first position, the exposed front face (7) of the second end of the shaft (5) bearing a directional mark (9) parallel to the plane of the butterfly disc (4),
- a lever (10) comprising a fitting portion (12), fitted in in a form-fitting manner on the second end of the shaft (5) and extending perpendicular to the shaft, and an oblong handle (11) which has a primarily longitudinal direction,
**characterised in that**
the shaft (5) has exactly two longitudinal grooves (8) corresponding to exactly two ribs (14) on the fitting portion (12), the two grooves (8) being arranged symmetrically in relation to one another with respect to the axis of repetition of the shaft (5), and the primary direction of the handle (11) runs parallel to the directional mark (9).

2. Quarter-turn valve according to claim 1, **characterised in that** the directional mark (9) is a saw kerf.

3. Quarter-turn valve according to either claim 1 or claim 2, **characterised in that** the grooves (8) extend on two side faces of the shaft (5) parallel to the directional mark (9).

4. Quarter-turn valve according to any one of the preceding claims, **characterised in that** each groove (8) is the same distance from the two longitudinal edges of the face on which it extends.
